# EUROPEAN PATENT SPECIFICATION

(11) **EP 3 089 459 B1**
(45) Date of publication and mention of the grant of the patent: **27.05.2020**
(21) Application number: 14877813.7
(22) Date of filing: 10.12.2014
(51) Int. Cl.: H04N 21/262, H04N 21/239, H04N 21/258, H04N 21/433

(54) **APPARATUS AND METHOD FOR IMPLEMENTING VIDEO-ON-DEMAND QUICK SWITCHING AMONG MULTIPLE SCREENS**
VORRICHTUNG UND VERFAHREN ZUR IMPLEMENTIERUNG VON VIDEO-AUF-ANFRAGE-SCHNELLUMSCHALTUNG ZWISCHEN MEHREREN BILDSCHIRMEN
APPAREIL ET PROCÉDÉ DE MISE EN UVRE D'UNE COMMUTATION RAPIDE DE VIDÉO À LA DEMANDE ENTRE DE MULTIPLES ÉCRANS

(30) Priority: 08.01.2014 CN 201410008421
(43) Date of publication of application: 02.11.2016
(73) Proprietor: Institute of Acoustics, Chinese Academy of Sciences, Haidian District Beijing 100190 (CN); Beijing Intellix Technologies Co. Ltd., Beijing 100190 (CN)
(72) Inventor: LIU, Xue, Beijing 100190 (CN); XU, Kaicheng, Beijing 100190 (CN); DANG, Shoujiang, Beijing 100190 (CN); JIANG, Jiawei, Beijing 100190 (CN)
(74) Representative: Cornford, James Robert
(86) International application number: PCT/CN2014/093480
(87) International publication number: WO 2015/103915

(56) References cited:
- EP-A1- 2 150 014
- CN-A- 102 802 048
- CN-A- 103 260 079
- CN-A- 103 428 556
- CN-A- 103 491 122
- US-A1- 2006 149 850
- US-A1- 2008 133 715
- US-A1- 2011 295 974

## Description

### FIELD OF THE INVENTION

The present invention relates to the field of interactive TV, and more particularly to an apparatus and method for implementing video-on-demand (VOD) quick switching among multiple screens.

### BACKGROUND OF THE INVENTION

Cable TV networks are currently the main channel for the vast majority of users to watch TV programs. Earlier cable TV networks only allowed users to passively watch TV programs. With the development of relevant technologies, current cable TV networks also provide users with a VOD function, i.e., users are able to watch TV programs on-demand based on their own interests and hobbies, thereby achieving interactions between the users and TVs.

Multi-screen interaction, as a form of interactive TV, has gained an expeditious development and is favored by vast number of users in recent years. Specifically, the term "multi-screen interaction" means that different operating systems and different terminal devices may operate across each other in a compatible manner, thereby achieving transmission of digital multimedia (high-definition videos, audios, and pictures) content via network connection and synchronizing content displayed on different screens.

In the prior art, there exist a plurality of protocols such as WIDI, DLNA, IGRS (Intelligent Grouping and Resource Sharing) which support multi-screen interaction. However, these protocols are not compatible with each other, and therefore are not able to intercommunicate. If different protocols are employed by different operating systems or different terminal devices, there would be problems in the multi-screen interaction between these operating systems or terminal devices. Currently, companies or research institutions has to employ a proprietary protocol to make different protocols compatible in order to truly achieve multi-screen interaction for operations across system platforms. This is obviously adverse to the promotion of multi-screen interaction technologies.

Moreover, according to existing multi-screen interaction-enabled protocols, a player can play video content only when it obtains a complete GOP (Group of Pictures). Without an I frame, subsequent P/B frames cannot be parsed, so that when playback switching is performed between multiple screens, a target screen generally starts playing from a next I frame or the present I frame, which leads to a "seam" in the playback switching that affects a user's watching experience. US 2008/133715 A1 discloses a playback system comprising a plurality of playback devices and implementing a playback switching method.

### SUMMARY OF THE INVENTION

The invention is defined by the appended set of claims. An objective of the present invention is to overcome the deficiency of a "seam" occurring to playback switching in existing playback switching methods, thereby providing a method and apparatus that are able to not only shorten the playback waiting time after switching but also perform playback switching at any position in a video.

In order to achieve the above objective, the present invention provides an apparatus for implementing video-on-demand quick switching among multiple screens, comprising: a client 101, a status maintenance unit 102, a playback switching control unit 103, and a media content service unit 104; wherein,
the client 101 is configured to initiate a playback switching request to the playback switching control unit 103, receive control instructions including content caching, content playback, and caching stop issued from the playback switching control unit 103, and perform functions including content caching, content playback, and caching stop; the client 101 comprises a plurality of clients, and the plurality of clients 101 have a binding relationship therebetween;
the status maintenance unit 102 is configured to maintain online status information of the clients 101 and maintain the binding relationship between the clients 101;
the playback switching control unit 103 is configured to determine potential receiving clients for playback switching in response to the playback switching request from the client 101, and control the client 101 to perform the functions including content caching, content playback, and caching stop; and
the media content service unit 104 is configured to, in response to a video service request from the client 101 and in accordance with content position information carried in the request, look up a GOP for the position, and provide a video service for the client 101 starting from a first frame of the GOP.

The present invention also provides a method for video-on-demand quick switching among multiple screens based on said apparatus, comprising:
sending, after a user initiates a playback switching via a first client, by said client, a "playback switching request" to a playback switching control unit 103, the "playback switching request" including an identifier of to-be-switched video content and a content position OFFSET_1;
taking, by the playback switching control unit 103, clients bound to said client and being online as potential receiving clients for this playback switching, and notifying the potential receiving clients to cache the content;
sending, after the user confirms this playback switching via the first client, by said client, a "playback switching acknowledgement" including a new playback position OFFSET_2 and an identifier of an actual receiving client to the playback switching control unit 103, and based thereupon, notifying, by the playback switching control unit 103, the actual receiving client to play the content from OFFSET_2, and notifying other potential receiving clients to stop caching; and
when the playback switching control unit does not receive the "playback switching acknowledgement" within a set time, notifying, by the playback switching control unit, all potential receiving clients to stop caching.

In the above technical solution, the method further comprises:
Step 1) sending, by a certain client 101, a "playback switching request" to the playback switching control unit 103; then proceeding to step 2);
Step 2) looking up, by the playback switching control unit 103 after receiving the "playback switching request," online status of all clients bound to said client; if there are online clients, then proceeding to step 3);
Step 3) taking, by the playback switching control unit 103, all online clients bound to said client as potential receiving clients for this playback switching, and transmitting a "playback switching notification" to the potential receiving clients; then proceeding to step 4);
Step 4) returning, by the playback switching control unit 103, online status of the bound clients to said client issuing the "playback switching request"; then proceeding to step 5);
Step 5) sending, by the potential receiving clients after receiving the "playback switching notification," a "video service request" to the media content service unit 104, the video service request including on-demand content identifier and video content position information; then processing to step 6);
Step 6) looking up, by the media content service unit 104, in response to the "video service request" from the potential receiving clients and in accordance with the playback position information carried in the request, a GOP for the position; then proceeding to step 7);
Step 7) providing, by the media content service unit 104, a video service to the potential receiving clients starting from a first frame of the GOP; then proceeding to step 8);
Step 8) caching content by the potential receiving clients, and waiting for further notification from the playback switching control unit 103;
Step 9) performing, by the client issuing the switching request after receiving the online client information returned from the playback switching control unit 103, switching acknowledgement by selecting a receiving client for the playback switching, and sending "playback switching acknowledgement" information to the playback switching control unit 103; then performing step 10) and step 12), respectively;
Step 10) notifying, by the playback switching control unit 103 after receiving the "playback switching acknowledgement" information, "start playback" information to an actual receiving client; then proceeding to step 11);
Step 11) starting, by the actual receiving client, normal playback until the end of the playback;
Step 12) sending, by the playback switching control unit 103, "cancel switching" information to other potential receiving clients while receiving the "playback switching acknowledgement" information; then proceeding to step 13); and
Step 13) stopping caching and playback.

Advantages of the present invention lies in that:
not only the playback waiting time after the switching can be shortened, but also the playback switching can be performed at any position in the video, thereby achieving video-on-demand fast switching between multiple screens.

### BRIEF DESCRIPTION OF THE DRAWINGS

Fig. 1 is a structural diagram of an apparatus for implementing video-on-demand fast switching between multiple screens according to the present invention;
Fig. 2 is a flow diagram of a method for video-on-demand fast switching between multiple screens; and
Fig. 3 is a work flow diagram of a client receiving on-demand switching.

### DETAILED DESCRIPTION OF THE INVENTION

The present invention will be described in further detail in conjunction with the accompanying drawings.

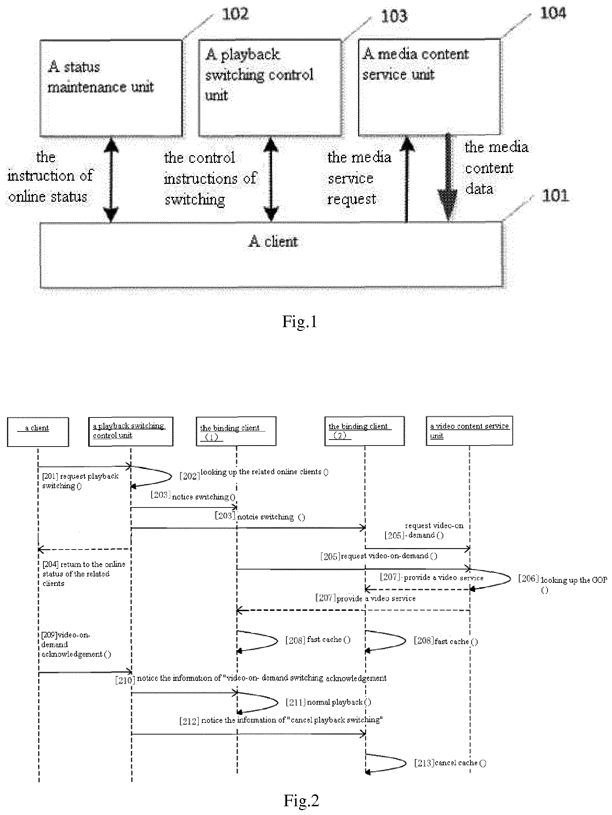

Fig. 1 is a structural diagram of an apparatus for implementing video-on-demand quick switching among multiple screens according to the present invention, the apparatus comprising: a client 101, a status maintenance unit 102, a playback switching control unit 103, and a media content service unit 104;
the client 101 is configured to initiate a playback switching request to the playback switching control unit 103, and receive control instructions including content caching, content playback, and caching stop issued from the playback switching control unit 103; the client 101 may comprise a plurality of clients, and the plurality of clients may have a binding relationship therebetween; content being played on a client may be switched onto other clients having a binding relationship with the client and played thereon.
the status maintenance unit 102 is configured to maintain online status information of the clients and maintain the binding relationship between the clients;
the playback switching control unit 103 is configured to determine potential receiving clients for playback switching in response to the playback switching request from the client 101, and control the clients to perform functions including content caching, content playback, and caching stop; and
the media content service unit 104 is configured to, in response to a video service request from the client 101 and in accordance with content position information carried in the request, look up a GOP for the position, and provide a video service for the client 101 starting from a first frame of the GOP.

Fig. 2 is a flow diagram of a method for video-on-demand quick switching among multiple screens, specifically comprising:
Step 201: sending, by a certain client 101, a "playback switching request" to the playback switching control unit 103, and then proceeding to step 202; wherein the "playback switching request" includes an identifier of to-be-switched video content and a content position (OFFSET_1);
Step 202: looking up, by the playback switching control unit 103 after receiving the "playback switching request," online status of all clients bound to said client; if there are online clients, then proceeding to step 203;
Step 203: taking, by the playback switching control unit 103, all online clients bound to said client as potential receiving clients for this playback switching, and transmitting a "playback switching notification" to the potential receiving clients; then proceeding to step 204; wherein the "playback switching notification" includes the identifier of the to-be-switched video content and the content position (OFFSET_1) obtained from the "playback switching request";
Step 204: returning, by the playback switching control unit 103, online status of the bound clients to said client issuing the "playback switching request"; then proceeding to step 205;
Step 205: sending, by the potential receiving clients after receiving the "playback switching notification," a "video service request" to the media content service unit 104, the video service request including the identifier of the to-be-switched video content and the content position (OFFSET_1) obtained from the "playback switching notification"; then processing to step 206;
Step 206: looking up, by the media content service unit 104, in response to the "video service request" from the potential receiving clients and in accordance with the playback position information carried in the request, a GOP for the position; then proceeding to step 207;
Step 207: providing, by the media content service unit 104, a video service to the potential receiving clients starting from a first frame of the GOP; then proceeding to step 208;
Step 208: caching content by the potential receiving clients, and waiting for further notification from the playback switching control unit 103;
Step 209: performing, by the client issuing the switching request after receiving the online client information returned from the playback switching control unit 103, switching acknowledgement by selecting a receiving client for the playback switching, and sending "playback switching acknowledgement" information to the playback switching control unit 103; then proceeding to step 210 and step 212; wherein the "playback switching acknowledgement" information includes an identifier of an actual receiving client and a new playback position (OFFSET_2);
Step 210: notifying, by the playback switching control unit 103 after receiving the "playback switching acknowledgement" information, "start playback" information to the actual receiving client; then proceeding to step 211;
Step 211: starting, by the actual receiving client, normal playback;
Step 212: sending, by the playback switching control unit 103, "cancel switching" information to other potential receiving clients while receiving the "playback switching acknowledgement" information; then proceeding to step 213; and
Step 213: stopping caching and playback.

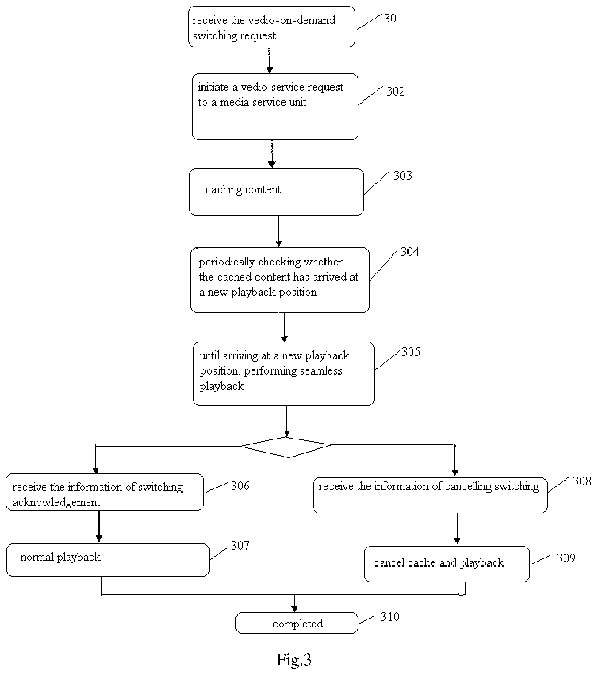

Fig. 3 is a work flow diagram of a client receiving playback switching, specifically comprising:
Step 301: receiving, by a client 101, a "request for playback switching" issued from a playback switching control unit 103; then proceeding to step 302;
Step 302: initiating, by the client 101, an video-on-demand request to a media content service unit 104; then proceeding to step 303;
Step 303: caching, by the client, content sent by the media content service unit 104; then proceeding to step 304;
Step 304: periodically checking and verifying whether the cached content has arrived at a new playback position; if so, then proceeding to step 305;
Step 305: performing seamless playback, and then proceeding to step 306 or step 308 according to different categories of the information received from the playback switching control unit 103;
Step 306: receiving "start playback" information sent by the playback switching control unit 103; then proceeding to step 307;
Step 307: starting, by the client, normal playback and caching, and finally performing step 310;
Step 308: receiving "cancel switching" information sent by the playback switching control unit 103; then proceeding to step 309;
Step 309: stop caching and seamless playback; and
Step 310: the flow is completed.

## Claims

1. A system for implementing video-on-demand quick switching among multiple screens, comprising: a plurality of clients (101), a status maintenance unit (102), a playback switching control unit (103) and a media content service unit (104); wherein:
a first client is configured to initiate a "playback switching request", including an identifier of to-be-switched video content and a content position OFFSET_1, to the playback switching control unit (103);
the plurality of clients (101) have a binding relationship therebetween wherein content being played on the first client may be switched to and played on the other clients having a binding relationship with the first client;
the status maintenance unit (102) is configured to maintain online status information of the clients (101) and maintain the binding relationship between the clients (101);
the playback switching control unit (103) is configured to:
determine potential receiving clients for playback switching in response to the "playback switching request";
notify the potential receiving clients to cache content;
control the clients (101) to perform functions including content caching, content playback and caching stop; and
return, to the first client, online status of the bound clients to the first client (101);
the potential receiving clients are configured to cache the content from the media content service unit (104) after being notified to cache content by the playback switching control unit (103);
the first client is configured to:
select a receiving client for the playback switching;
send, after the user confirms this playback switching via the first client, a "playback switching acknowledgement" including a new playback position OFFSET_2 and an identifier of the selected receiving client to the playback switching control unit (103); and
based thereupon, the playback switching control unit (103) is configured to:
notify the selected receiving client to play the content from OFFSET_2 and notify other potential receiving clients to stop caching; and
when the playback switching control unit (103) does not receive the "playback switching acknowledgement" within a set time, notify all potential receiving clients to stop caching.

2. The system of claim 1, wherein the playback switching control unit (103) is configured to notify the potential receiving clients to cache content by the playback switching control unit (103) being configured to transmit a "playback switching notification" to the potential receiving clients that includes the identifier of the to-be-switched video content and the content position OFFSET_1 obtained from the "playback switching request".

3. The system of claim 2, wherein the potential receiving clients are configured to send, after receiving the "playback switching notification", a "video service request" to the media content service unit (104), the video service request including the identifier of the to-be-switched video content and the content position OFFSET_1 obtained from the "playback switching notification".

4. The system of claim 3, wherein the media content service unit (104) is configured to, in response to the "video service request" from the potential receiving clients and in accordance with the content position OFFSET_1 in the request, look up a GOP for the position, and provide a video service for the potential receiving clients starting from a first frame of the GOP.

5. A method for video-on-demand quick switching among multiple screens, comprising:
sending, after a user initiates a playback switching via a first client, by said first client, a "playback switching request" to a playback switching control unit (103), the "playback switching request" including an identifier of to-be-switched video content and a content position OFFSET_1;
taking, by the playback switching control unit (103), clients bound to said first client and being online as potential receiving clients for this playback switching, and notifying the potential receiving clients to cache the content;
caching, by each potential receiving client, the content from a media content service unit (104);
returning to the first client, by the playback switching control unit (103), online status of the bound clients to the first client, said online status and binding relationship being maintained in a status maintenance unit (102);
selecting, by the first client, a receiving client for the playback switching;
sending, after the user confirms this playback switching via the first client, by said first client, a "playback switching acknowledgement" including a new playback position OFFSET_2 and an identifier of the selected receiving client to the playback switching control unit (103), and based thereupon, notifying, by the playback switching control unit (103), the selected receiving client to play the content from OFFSET_2, and notifying other potential receiving clients to stop caching; and
when the playback switching control unit does not receive the "playback switching acknowledgement" within a set time, notifying, by the playback switching control unit, all potential receiving clients to stop caching.

6. The method according to claim 5, wherein notifying the potential receiving clients to cache the content comprises:
transmitting a "playback switching notification" that includes the identifier of the to-be-switched video content and the content position OFFSET_1 obtained from the "playback switching request".

7. The method according to claim 6, further comprising:
sending, by the potential receiving clients after receiving the "playback switching notification", a "video service request" to the media content service unit (104), the video service request including the identifier of the to-be-switched video content and the content position OFFSET_1 obtained from the "playback switching notification".

8. The method according to claim 7, further comprising:
looking up, by the media content service unit (104), in response to the "video service request" from the potential receiving clients and in accordance with the playback position information carried in the request, a GOP for the position; then
providing, by the media content service unit (104), a video service to the potential receiving clients starting from a first frame of the GOP.

9. The method for video-on-demand quick switching among multiple screens according to claim 5, comprising:
looking up, by the playback switching control unit (103) after receiving the "playback switching request," online status of all clients bound to said client and if there are online clients, then taking, by the playback switching control unit (103), all online clients bound to said client as potential receiving clients for this playback switching, and transmitting a "playback switching notification" to the potential receiving clients;
sending, by the potential receiving clients after receiving the "playback switching notification," a "video service request" to the media content service unit (104), the video service request including on-demand content identifier and video content position information; then
looking up, by the media content service unit (104), in response to the "video service request" from the potential receiving clients and in accordance with the playback position information carried in the request, a GOP for the position; then
providing, by the media content service unit (104), a video service to the potential receiving clients starting from a first frame of the GOP; then
caching content by the potential receiving clients, and waiting for further notification from the playback switching control unit (103);
notifying, by the playback switching control unit (103) after receiving the "playback switching acknowledgement" information, "start playback" information to the selected receiving client; then starting, by the selected receiving client, normal playback until the end of the playback; and
sending, by the playback switching control unit (103), "cancel switching" information to other potential receiving clients while receiving the "playback switching acknowledgement" information and then stopping caching and playback.

## Patentansprüche

1. System zum Implementieren von Video-on-Demand-Schnellumschaltung zwischen mehreren Bildschirmen, das Folgendes umfasst: mehrere Clients (101), eine Statusführungseinheit (102), eine Wiedergabeumschaltsteuereinheit (103) und eine Medieninhaltsdiensteeinheit (104); wobei:
ein erster Client zum Einleiten einer "Wiedergabeumschaltanforderung" einschließlich einer Kennung von umzuschaltendem Videoinhalt und einer Inhaltsposition OFFSET_1 an die Wiedergabeumschaltsteuereinheit (103) konfiguriert ist;
die mehreren Clients (101) eine Bindungsbeziehung zueinander haben, wobei auf dem ersten Client wiedergegebener Inhalt auf die anderen Clients mit einer Bindungsbeziehung mit dem ersten Client umgeschaltet und wiedergegeben werden kann;
die Statusführungseinheit (102) zum Führen von Online-Statusinformationen der Clients (101) und zum Führen der Bindungsbeziehung (101) zwischen den Clients (101) konfiguriert ist;
die Wiedergabeumschaltsteuereinheit (103) konfiguriert ist zum:
Bestimmen potentieller Empfangs-Clients für eine Wiedergabeumschaltung als Reaktion auf die "Wiedergabeumschaltanforderung";
Benachrichtigen der potentiellen empfangenden Clients, Inhalt zu cachen;
Steuern der Clients (101) zum Durchführen von Funktionen einschließlich Inhalts-Caching, Inhaltswiedergabe und Caching-Stopp; und
Zurückgeben, an den ersten Client, eines Online-Status der gebundenen Clients an den ersten Client (101);
die potentiellen Empfangs-Clients zum Cachen des Inhalts von der Medieninhaltsdiensteeinheit (104) konfiguriert sind, nachdem sie von der Wiedergabeumschaltsteuereinheit (103) benachrichtigt wurden, Inhalt zu cachen;
der erste Client konfiguriert ist zum:
Auswählen eines empfangenden Client zur Wiedergabeumschaltung;
Senden, wenn der Benuzer diese Wiedergabeumschaltung über den ersten Client bestätigt, einer "Wiedergabeumschaltbestätigung" einschließlich einer neuen Wiedergabeposition OFFSET_2 und einer Kennung des gewählten Empfangs-Client an die Wiedergabeumschaltsteuereinheit (103); und
wobei die Wiedergabeumschaltsteuereinheit (103) auf der Basis davon konfiguriert ist zum:
Benachrichtigen des gewählten Empfangs-Client, den Inhalt von OFFSET_2 wiederzugeben, und Benachrichtigen anderer potentieller Empfangs-Clients, das Caching zu stoppen; und
Benachrichtigen, wenn die Wiedergabeumschaltsteuereinheit (103) die "Wiedergabeumschaltbestätigung" nicht innerhalb einer voreingestellten Zeit empfängt, aller potentiellen Empfangs-Clients, das Caching zu stoppen.

2. System nach Anspruch 1, wobei die Wiedergabeumschaltsteuereinheit (103) zum Benachrichtigen der potentiellen Empfangs-Clients konfiguriert ist, den Inhalt zu cachen, indem die Wiedergabeumschaltsteuereinheit (103) zum Übertragen einer "Wiedergabeumschaltbenachrichtigung" zu den potentiellen Empfangs-Clients konfiguriert ist, die die Kennung des umzuschaltenden Videoinhalts und die von der "Wiedergabeumschaltbenachrichtigung" erhaltene Inhaltsposition OFFSET_1 beinhaltet.

3. System nach Anspruch 2, wobei die potentiellen Empfangs-Clients zum Senden, nach dem Empfang der "Wiedergabeumschaltbenachrichtigung", einer "Videodiensteanforderung" zur Medieninhaltsdiensteeinheit (104) konfiguriert sind, wobei die Videodiensteanforderung die Kennung des umzuschaltenden Videoinhalts und die von der "Wiedergabeumschaltbenachrichtigung" erhaltene Inhaltsposition OFFSET_1 beinhaltet.

4. System nach Anspruch 3, wobei die Medieninhaltsdiensteeinheit (104) so konfiguriert ist, dass sie als Reaktion auf die "Videodiensteanforderung" von den potentiellen Empfangs-Clients und gemäß der Inhaltsposition OFFSET_1 in der Anforderung eine GOP für die Position nachschlägt und einen Videodienst für die potentiellen Empfangs-Clients beginnend mit einem ersten Frame der GOP leistet.

5. Verfahren für Video-on-Demand-Schnellumschaltung zwischen mehreren Bildschirmen, das Folgendes beinhaltet:
Senden, wenn ein Benutzer eine Wiedergabeumschaltung über einen ersten Client eingeleitet hat, durch den genannten ersten Client, einer "Wiedergabeumschaltanforderung" an eine Wiedergabeumschaltsteuereinheit (103), wobei die "Wiedergabeumschaltanforderung" eine Kennung von umzuschaltendem Videoinhalt und eine Inhaltsposition OFFSET_1 beinhaltet;
Nehmen, durch die Wiedergabeumschaltsteuereinheit (103), von an den genannten ersten Client gebundenen Clients, die online sind, als potentielle Empfangs-Clients für diese Wiedergabeumschaltung, und Benachrichtigen der potentiellen Empfangs-Clients, den Inhalt zu cachen;
Cachen, durch jeden potentiellen Empfangs-Client, des Inhalts von einer Medieninhaltsdiensteeinheit (104);
Zurückgeben, durch die Wiedergabeumschaltsteuereinheit (103), des Online-Status der gebundenen Clients an den ersten Client, wobei der genannte Online-Status und die verbindliche Beziehung in einer Statusführungseinheit (102) geführt werden;
Auswählen, durch den ersten Client, eines Empfangs-Client für die Wiedergabeumschaltung;
Senden, nachdem der Benutzer diese Wiedergabeumschaltung über den ersten Client bestätigt hat, durch den genannten ersten Client, einer "Wiedergabeumschaltbestätigung" einschließlich einer neuen Wiedergabeposition OFFSET_2 und einer Kennung des gewählten Empfangs-Client an die Wiedergabeumschaltsteuereinheit (103), und Benachrichtigen des gewählten Empfangs-Client auf der Basis davon, durch die Wiedergabeumschaltsteuereinheit (103), den Inhalt von OFFSET_2 wiederzugeben, und Benachrichtigen anderer potentieller Empfangs-Clients, das Caching zu stoppen; und
Benachrichtigen durch die Wiedergabeumschaltsteuereinheit, wenn die Wiedergabeumschaltsteuereinheit die "Wiedergabeumschaltbestätigung" nicht innerhalb einer bestimmten Zeit empfängt, aller potentiellen Empfangs-Clients, das Caching zu stoppen.

6. Verfahren nach Anspruch 5, wobei das Benachrichtigen der potentiellen Empfangs-Clients, den Inhalt zu cachen, Folgendes beinhaltet:
Übertragen einer "Wiedergabeumschaltbenachrichtigung", die die Kennung des umzuschaltenden Videoinhalts und die von der "Wiedergabeumschaltanforderung" erhaltene Inhaltsposition OFFSET_1 beinhaltet.

7. Verfahren nach Anspruch 6, das ferner Folgendes beinhaltet:
Senden, durch die potentiellen Empfangs-Clients nach dem Empfang der "Wiedergabeumschaltbenachrichtigung", einer "Videodiensteanforderung" zur Medieninhaltsdiensteeinheit (104), wobei die Videodiensteanforderung die Kennung des umzuschaltenden Videoinhalts und die von der "Wiedergabeumschaltbenachrichtigung" erhaltene Inhaltsposition OFFSET_1 beinhaltet.

8. Verfahren nach Anspruch 7, das ferner Folgendes beinhaltet:
Nachschlagen, durch die Medieninhaltsdiensteeinheit (104), als Reaktion auf die "Videodiensteanforderung" von den potentiellen Empfangs-Clients und gemäß der in der Anforderung geführten Wiedergabepositionsinformation, einer GOP für die Position; dann Leisten, durch die Medieninhaltsdiensteeinheit (104), eines Videodienstes den die potentiellen Empfangs-Clients beginnend mit einem ersten Frame der GOP.

9. Verfahren für Video-on-Demand-Schnellumschaltung zwischen mehreren Bildschirmen nach Anspruch 5, das Folgendes beinhaltet:
Nachschlagen, durch die Wiedergabeumschaltsteuereinheit (103) nach dem Empfang der "Wiedergabeumschaltanforderung", von Online-Status aller an den genannten Client gebundenen Clients und, falls sie Online-Clients sind, Nehmen, durch die Wiedergabeumschaltsteuereinheit (103), aller an den genannten Client gebundenen Online-Clients als potentielle Empfangs-Clients für diese Wiedergabeumschaltung, und Übertragen einer "Wiedergabeumschaltbenachrichtigung" an die potentiellen Empfangs-Clients;
Senden, durch die potentiellen Empfangs-Clients nach dem Empfang der "Wiedergabeumschaltbenachrichtigung", einer "Videodiensteanforderung" zur Medieninhaltsdiensteeinheit (104), wobei die Videodiensteanforderung On-Demand-Inhaltskennung und Videoinhaltspositionsinformationen beinhaltet; dann
Nachschlagen, durch die Medieninhaltsdiensteeinheit (104), als Reaktion auf die "Videodiensteanforderung" von den potentiellen Empfangs-Clients und gemäß den in der Anforderung geführten Wiedergabepositionsinformationen, einer GOP für die Position; dann
Leisten, durch die Medieninhaltsdiensteeinheit (104), eines Videodienstes den potentiellen Empfangs-Clients beginnend mit einem ersten Frame der GOP; dann
Cachen von Inhalt durch die potentiellen Empfangs-Clients und Warten auf eine weitere Benachrichtigung von der Wiedergabeumschaltsteuereinheit (103);
Übermitteln, durch die Wiedergabeumschaltsteuereinheit (103) nach dem Empfang der "Wiedergabeumschaltbestätigungs"-Informationen, von "Wiedergabestart"-Informationen an den gewählten Empfangs-Client; dann Starten, durch den gewählten Empfangs-Client, von normaler Wiedergabe bis zum Ende der Wiedergabe; und
Senden, durch die Wiedergabeumschaltsteuereinheit (103), von "Umschaltstornierungs"-Informationen zu anderen potentiellen Empfangs-Clients, dabei Empfangen der "Wiedergabeumschaltbestätigungs"-Informationen, und dann Stoppen von Caching und Wiedergabe.

## Revendications

1. Système permettant de mettre en œuvre une commutation rapide de vidéo à la demande parmi de multiples écrans, comprenant : une pluralité de clients (101), une unité de maintenance d'état (102), une unité de commande de commutation de lecture (103) et une unité de service de contenu audiovisuel (104) ; dans lequel :
un premier client est configuré pour lancer une "demande de commutation de lecture", comprenant un identifiant de contenu vidéo à commuter et un emplacement de contenu OFFSET_1, destiné à l'unité de commande de commutation de lecture (103) ;
la pluralité de clients (101) ont une relation d'association entre eux dans laquelle le contenu qui est lu sur le premier client peut être commuté et lu sur les autres clients ayant une relation d'association avec le premier client ;
l'unité de maintenance d'état (102) est configurée pour maintenir les informations d'état en ligne des clients (101) et pour maintenir la relation d'association entre les clients (101) ;
l'unité de commande de commutation de lecture (103) est configurée pour :
déterminer les clients de réception possible de la commutation de lecture en réponse à la "demande de commutation de lecture" ;
notifier les clients de réception possible de la nécessité d'une mise en mémoire cache du contenu ;
commander les clients (101) de sorte à mettre en œuvre des fonctions telles que la mise en mémoire cache du contenu, la lecture du contenu et l'arrêt de mise en mémoire cache ; et
renvoyer, au premier client, l'état en ligne des clients associés au premier client (101) ;
les clients de réception possible étant configurés pour mettre en mémoire cache le contenu de l'unité de service de contenu audiovisuel (104) après avoir été notifiés de la nécessité d'une mise en mémoire cache du contenu par l'unité de commande de commutation de lecture (103) ;
le premier client est configuré pour :
sélectionner un client de réception pour la commutation de lecture ;
envoyer, après que l'utilisateur a confirmé cette commutation de lecture via le premier client, un "accusé de réception de commutation de lecture" comprenant un nouvel emplacement de lecture OFFSET_2 et un identifiant du client de réception sélectionné, à l'unité de commande de commutation de lecture (103) ; et
sur cette base, l'unité de commande de commutation de lecture (103) est configurée pour notifier le client de réception sélectionné de lire le contenu de OFFSET_2 et pour notifier d'autres clients de réception possible d'arrêter la mise en mémoire cache ; et
lorsque l'unité de commande de commutation de lecture (103) ne reçoit pas l'"accusé de réception de commutation de lecture" dans un délai déterminé, pour notifier tous les clients de réception possible d'arrêter la mise en mémoire cache.

2. Système selon la revendication 1, dans lequel l'unité de commande de commutation de lecture (103) est configurée pour notifier les clients de réception possible de faire mettre en mémoire cache le contenu par l'unité de commande de commutation de lecture qui est configurée pour transmettre une « notification de commutation de lecture », aux clients de réception possible qui renferme l'identifiant du contenu vidéo à commuter et l'emplacement du contenu OFFSET_1 obtenu à partir de la « demande de commutation de lecture ».

3. Système selon la revendication 2, dans lequel les clients de réception possible sont configurés pour envoyer, après avoir reçu la "notification de commutation de lecture", une "demande de service vidéo" à l'unité de service de contenu audiovisuel (104), la demande de service vidéo comprenant l'identifiant du contenu vidéo à commuter et l'emplacement du contenu OFFSET_1 obtenu à partir de la "notification de commutation de lecture".

4. Système selon la revendication 3, dans lequel l'unité de service de contenu audiovisuel (104) est configurée, en réponse à la "demande de service vidéo" provenant des clients de réception possible et conformément à l'emplacement de contenu OFFSET_1 dans la demande, pour rechercher un GOP (Group of pictures - groupe d'images) pour l'emplacement, et pour fournir un service vidéo pour les clients de réception possible démarrant à partir d'une première trame du GOP.

5. Procédé de commutation rapide de vidéo à la demande parmi de multiples écrans, comprenant les étapes consistant à :
envoyer, après qu'un utilisateur a lancé une commutation de lecture via un premier client, par ledit premier client, une "demande de commutation de lecture" destinée à une unité de commande de commutation de lecture (103), la "demande de commutation de lecture" comprenant un identifiant du contenu vidéo à commuter et un emplacement de contenu OFFSET_1 ;
l'unité de commande de commutation de lecture (103) servant à répondre aux clients associés audit premier client et étant en ligne en tant que clients de réception possible à cette demande de commutation de lecture et à notifier les clients de réception possible de mettre le contenu en mémoire cache ;
faire mettre en mémoire cache, par chaque client de réception possible, le contenu provenant d'une unité de service de contenu audiovisuel (104) ;
faire renvoyer au premier client, par l'unité de commande de commutation de lecture (103), l'état en ligne des clients associés au premier client, lesdits état en ligne et la relation d'association étant maintenus dans une unité de maintenance d'état (102) ;.
faire sélectionner, par le premier client, un client de réception pour la commutation de lecture ;
envoyer, après confirmation par l'utilisateur de cette commutation de lecture via le premier client, par ledit premier client, un "accusé de réception de commutation de lecture" comprenant un nouvel emplacement de lecture OFFSET_2 et un identifiant du client récepteur sélectionné, à l'unité de commande de commutation de lecture (103), et sur cette base, notifier, par l'intermédiaire de l'unité de commande de commutation de lecture (103), le client de réception sélectionné de lire le contenu de OFFSET_2, et notifier d'autres clients de réception possible d'arrêter la mise en mémoire cache ; et
lorsque l'unité de commande de commutation de la lecture ne reçoit pas l'"accusé de réception de commutation de lecture" dans un délai déterminé, notifier, par l'intermédiaire de l'unité de commande de commutation de lecture, tous les clients de réception possible d'arrêter la mise en mémoire cache.

6. Procédé selon la revendication 5, dans lequel la notification aux clients de réception possible de mettre le contenu en mémoire cache, comprend :
la transmission d'une "notification de commutation de lecture" qui comprend l'identifiant du contenu vidéo à commuter et l'emplacement du contenu OFFSET_1 obtenu à partir de la "demande de commutation de lecture".

7. Procédé selon la revendication 6, comprenant en outre :
l'envoi, par les clients de réception possible après avoir reçu la "notification de commutation de lecture", d'une "demande de service vidéo", à l'unité de service de contenu audiovisuel (104), la demande de service vidéo comprenant l'identifiant du contenu vidéo à commuter et l'emplacement du contenu OFFSET_1 obtenu à partir de la "notification de commutation de lecture".

8. Procédé selon la revendication 7, comprenant en outre :
la recherche, par l'unité de service de contenu audiovisuel (104), en réponse à la "demande de service vidéo" provenant des clients de réception possible et conformément aux informations d'emplacement de lecture contenues dans la demande, d'un GOP pour l'emplacement ; puis
la fourniture, par l'unité de service de contenu audiovisuel (104), d'un service vidéo aux clients de réception possible démarrant à partir d'une première trame du GOP.

9. Procédé de commutation rapide de vidéo à la demande parmi de multiples écrans selon la revendication 5, comprenant :
la recherche, par l'unité de commande de commutation de lecture (103) après avoir reçu la "demande de commutation de lecture", de l'état en ligne de tous les clients associés audit client et, s'il y a des clients en ligne, la prise, par l'unité de commande de commutation de lecture (103), de tous les clients en ligne associés audit client comme clients de réception possible pour cette commutation de lecture, et la transmission d'une "notification de commutation de lecture" aux clients de réception possible ;
l'envoi, par les clients de réception possible après réception de la "notification de commutation de la lecture", d'une "demande de service vidéo" à l'unité de service de contenu audiovisuel (104), la demande de service vidéo comprenant l'identifiant du contenu à la demande et les informations sur l'emplacement du contenu vidéo ; puis
la recherche, par l'unité de service de contenu audiovisuel (104), en réponse à la "demande de service vidéo" provenant des clients de réception possible et conformément aux informations d'emplacement de lecture figurant dans la demande, d'un GOP pour l'emplacement ; puis
la fourniture, par l'unité de service de contenu audiovisuel (104), d'un service vidéo aux clients de réception possible démarrant à partir d'une première trame du GOP ; puis
la mise en mémoire cache du contenu par les clients de réception possible, et l'attente d'une nouvelle notification de l'unité de commande de commutation de lecture (103) ;
la notification, par l'unité de commande de commutation de la lecture (103), après réception de l'information d'"accusé de réception de commutation de lecture", de l'information de "démarrage de lecture" au client de réception sélectionné ; puis le démarrage, par le client de réception sélectionné, de la lecture normale jusqu'à la fin de la lecture ; et
l'envoi, par l'unité de commande de commutation de lecture (103), d'une information "d'annulation de commutation" à d'autres clients de réception possible tout en recevant l'information "d'accusé de réception de commutation de lecture" et en arrêtant ensuite la mise en mémoire cache et la lecture.
